# EUROPÄISCHE PATENTANMELDUNG

(11) **EP 0 594 045 A1**
(43) Veröffentlichungstag der Anmeldung: **27.04.1994**
(21) Anmeldenummer: 93116535.1
(22) Anmeldetag: 13.10.1993
(51) Int. Cl.: B60C 11/00, B60C 11/18

(54) **Fahrzeugreifen mit Laufstreifen**

(30) Priorität: 21.10.1992 DE 4235419
(71) Anmelder: Continental Aktiengesellschaft, D-30165 Hannover (DE)
(72) Erfinder: Gereke, Robert, Dr. Dipl.-Chem., D-38116 Braunschweig (DE); Huinink, Heinrich, Dipl.-Ing., D-30823 Garbsen (DE)

(57) **Zusammenfassung**

Die Erfindung bezieht sich auf einen Fahrzeugreifen (1) mit einem auf seiner radial äußeren Seite angeordneten Laufstreifen (7, 8), der in mindestens zwei Schichten (8a, 8b, 8c, 8d, 7) unterteilt ist, wobei sich diese Schichten hinsichtlich ihrer für den Bremsweg auf Nässe relevanten physikalischen Eigenschaften unterscheiden. Um die Bremsweg-Verlängerung über abnehmender Profiltiefe zu verringern, schlagen die Erfinder vor, daß die für den Bremsweg auf Nässe relevanten physikalischen Eigenschaften der radial innersten, gegen Ende der Nutzungsdauer des Fahrzeugreifens (1) in Fahrbahnkontakt tretenden Schicht (8d) des Laufstreifens (7, 8) größer sind als die für den Bremsweg auf Nässe relevanten physikalischen Eigenschaften der radial äußersten, zu Beginn der Nutzungsdauer des Fahrzeugreifens (1) in Fahrbahnkontakt tretenden Schicht (8a) des Laufstreifens (7, 8).

## Beschreibung

Die Erfindung bezieht sich auf einen Fahrzeugreifen mit Laufstreifen gemäß dem Oberbegriff des Anspruches 1. Die im Laufstreifen angeordneten - in der Serienfertigung üblicherweise während des Vulkanisierens in einer Form eingeprägten - Negative haben im wesentlichen die Aufgabe, bei Betrieb auf nassen Straßen Wasser aufzunehmen, damit die Bodenhaftung des Reifens so wenig wie möglich beeinträchtigt wird. Neben der Formgebung - wie Krümmungsverlauf und Schlankheitsverhältnis - hängt die erreichte Größe der gewünschten Wasserverdrängung maßgeblich vom Negativvolumen ab. Dieses wiederum ist das Integral über der Profiltiefe der Negativfläche bei Schnitt in Umfangsrichtung an jeder profiltiefenstelle in den Grenzen vom Profilrillengrund bis zur aktuellen Peripherie; kurzum das Negativvolumen nimmt über der Lebensdauer mit abnehmender Profiltiefe ab und die Bremswege nehmen entsprechend zu.

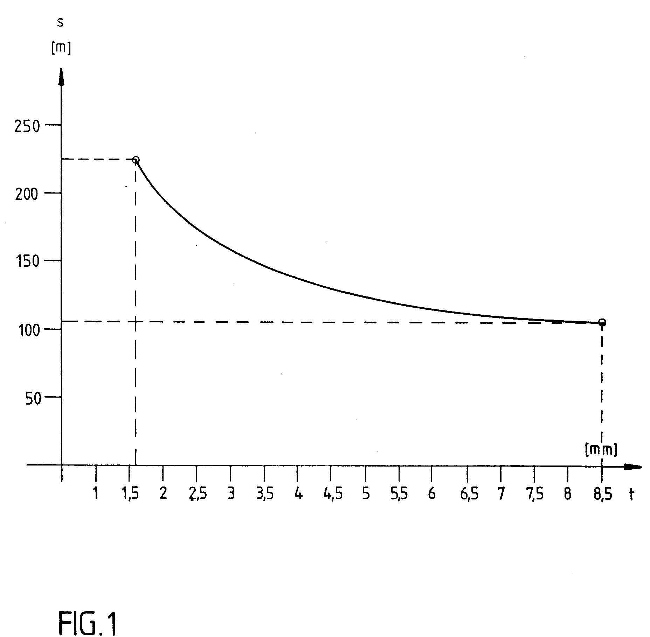

Figur 1 erläutert diesen Stand der Technik in einem Diagramm, welches auf der waagerechten Achse die Profiltiefe t bis 8,5 mm, einer geläufigen Profiltiefe für PKW-Neureifen, zeigt und auf der senkrechten Achse den erforderlichen Bremsweg aus 120 km/h bei einer bestimmten Wassertiefe. Während bei voller Profiltiefe noch ein Bremsweg von 105 m ausreicht, ist bei 1,6 mm Profiltiefe, der vom Gesetzgeber kürzlich neu festgelegten Profilmindesttiefe, schon ein Bremsweg von 225 m erforderlich, also mehr als das doppelte.

Hiervon ausgehend gelangen die Erfinder zu der Einschätzung, daß viele Auffahrunfälle auf regennasser Straße vermeidlich wären oder zumindest glimpflicher verliefen, wenn der Bremsweganstieg über abnehmender Profiltiefe zumindest kleiner, vorzugsweise über einen weiten Bereich völlig unterdrückt wäre. Es stört nämlich nicht nur des Bremsweges große Länge an sich sondern - wenn mehrere Fahrzeuge in einer "Schlange" hintereinander herfahren - auch dessen verschiedene Länge von Fahrzeug zu Fahrzeug, je nach dort verbiebener Profilresttiefe.

Dies sei anhand von Figur 1 an einem Beispiel erläutert:
Es fahre ein erstes Fahrzeug mit 120 km/h auf ein Hindernis zu und bemesse den Zeitpunkt seines Verzögerungsbeginns so, daß es eingedenk seiner neuen Reifen gerade noch vor dem Hindernis zum Stillstand komme. Ein nachfolgendes Fahrzeug mit weitestzulässig abgefahrenen Reifen könne das Hindernis nicht durch das voraus fahrende Fahrzeug hindurch sehen und halte zu diesem einen Abstand von weniger als 225m - 105m, also weniger als 120 m, ein. Selbst wenn die Reaktionszeit des hinterher fahrenden Fahrzeuges 0 wäre, wäre das Auffahren des hinteren Fahrzeuges auf das vordere unvermeidlich.

Für den Fall, daß das erste Fahrzeug an sich hätte früher bremsen können, einen früheren Bremsbeginn mit entsprechend verringerte Maximalverzögerung also nur deshalb unterließ, weil es nach Verinnerlichung des eigenen guten Bremsvermögens keine Notwendigkeit dazu sah, hätte ein längerer Bremsweg dieses ersten Fahrzeuges das geschilderte Unfall-Szenario unwahrscheinlicher oder zumindest milder gemacht.

Diese Überlegungen führten zu der originellen technischen Aufgabenstellung, neben der Länge des Bremsweges dessen Varianz über variierender Profiltiefe zu verringern.

Die Aufgabe wird erfindungsgemäß durch die kennzeichnenden Merkmale des Anspruches 1 gelöst, also dadurch, daß die für den Bremsweg auf Nässe relevanten physikalischen Eigenschaften der radial innersten, gegen Ende der Nutzungsdauer des Reifens in Fahrbahnkontakt tretenden Schicht des Laufstreifens größer sind als die für den Bremsweg auf Nässe relevanten physikalischen Eigenschaften der radial äußersten, zu Beginn der Nutzungsdauer des Reifens in Fahrbahnkontakt tretenden Schicht. Die hier angesprochenen, für den Bremsweg auf Nässe relevanten physikalischen Eigenschaften werden durch die Werkstoffwahl, also das Mischungsrezept und den chemischen Aufbau der Mischungsbestandteile, besonders des bzw. der Polymere, der Füllstoffe und Vulkanisationshilfen bestimmt.

Die nach derzeitigem Kenntnisstand wichtigste physikalische Eigenschaft einer vulkanisierten Kautschukmischung, die für den Bremsweg auf Nässe relevant ist, ist die Hysterese. Eine weitere wesentliche Eigenschaft ist die Weichheit. Dem Fachmann ist bekannt, zumindest bei hinreichender Kenntnis des Reibungspartners Fahrbahn, auf welche Frequenz- bzw. Temperaturbereiche es dabei besonders ankommt.

Bei erfindungsgemäßer Varianz der Hysteresis und/oder der Weichheit über der Radialen gibt es einen Konflikt zwischen den beiden Einzelzielen der Aufgabenstellung: Würde die äußerste Schicht des Laufstreifens und damit auch deren Hysterese und Weichheit, also die beiden den Reibbeiwert im wesentlichen determinierenden Parameter, so gewählt wie an einem Referenzreifen des Standes der Technik, sodaß dessen Bremsweg bei Nässe im Neuzustand unverändert bliebe, und würde erfindungsgemäß von Schicht zu Schicht nach innen gehend die Hysterese bei unveränderter Härte erhöht, so würde ein solcher Reifen neben einer verringerten Verschlechterung der Bremsleistung über der Nutzungsdauer eine Verschlechterung im Rollwiderstand zeigen.

Denn die inneren Schichten mit ihrer hohen Hysteresis vergrößern ihren Anteil am Rollwiderstand. Abgesehen von einem erhöhten Treibstoffverbrauch führt dies auch zu einer größeren Polymeraufheizung und damit verringerter Alterungsbeständigkeit und Hochgeschwindigkeitsfestigkeit. Ein gewisser Ausgleich ist dadurch möglich, das gegenüber dem Stand der Technik nicht nur die Hysteresis der innersten noch in Fahrbahnkontakt geratenden Schicht erhöht wird, sondern auch die Hysteresis der äußersten Schicht gesenkt wird; damit aber müßte eine gewisse Verlängerung des Bremsweges des Reifens im Neuzustand hingenommen werden.

Gelingt eine deutliche Verkürzung des Bremsweges bei kleiner Profiltiefe, so kann die Hinnahme einer kleinen Bremswegverlängerung bei voller Profiltiefe - jeweils gegenüber dem Stand der Technik - hingenommen werden. Insofern haben sich die Erfinder schon bei ihrer Aufgabenstellung vom Bekannten, nämlich dem ausschließlichen Beachten des Bremsweges des Neureifen und dessen möglichster Verkürzung getrennt.

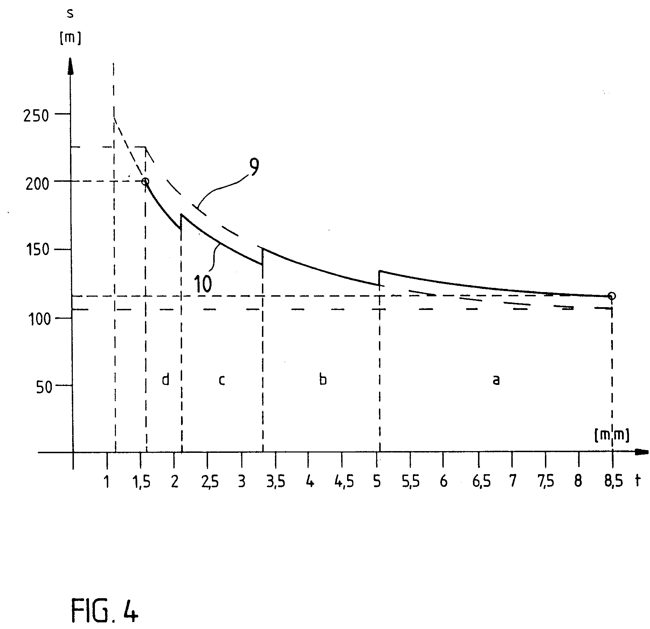

Zweckmäßigerweise wird der Laufstreifen in dem Tiefenbereich, in dem Fahrbahnkontakt vorgesehen ist, nicht nur aus zwei (wie es der erfindungsgemäßen Lösung nach Anspruch 1 bereits entsprechen würde), sondern aus mehreren verschiedenen Schichten zusammengesetzt; dadurch kann der Bremswegsprung (siehe auch Figur 4) bei Eintreten einer Schichtengrenzfläche in die Peripherie klein gehalten werden; freilich kann die Schichtenzahl mit Rücksicht auf die Produktionskosten nicht beliebig hoch getrieben werden; eine Untergliederung in vier Schichten scheint ein glücklicher Kompromiß zwischen den verschiedenen Gesichtspunkten zu sein.

Eine noch weitergehende Verstetigung des Bremswegverlaufes bei Nässe über der Profiltiefe kann dadurch erreicht werden, daß die Schichtengrenzflächen schräg zu den sich über der Lebensdauer ergebenden Peripherielinien gestellt werden. Dadurch erfolgt der Wechsel von einer zur anderen Mischung nicht spontan über der ganzen axialen Breite sondern zunächst nur an der axialen Stelle, wo die nächstinnere Schicht zuerst an die Peripherie tritt, wonach die axiale Erstreckung des Kontaktflächenanteiles der nächstinneren Schicht allmählich zunimmt.

Neben einer Vergrößerung der Hysteresis nach radial innen hin bei konstanter Härte führt auch eine Vergrößerung der Weichheit nach radial innen hin bei konstanter Härte zu erhöhtem Reibungsbeiwert µ und genauso auch zu erhöhtem Walkwiderstand. Von daher sind beide Mittel grundsätzlich austauschbar; indessen scheint das Optimum in einer Kombination beider Mittel zu liegen:
Es empfiehlt sich eine Hysterese-Zunahme bei im wesentlichen konstanter Härte beim Übergang von der äußersten zur zweitäußersten Schicht, eine Weichheit-Zunahme bei im wesentlichen konstanter Hysteresis beim Übergang von der zweitinnersten zur innersten in Fahrbahnkontakt tretenden Schicht und eine entsprechend kleinere Varianz beider Einzelgrößen an jedem weiteren dazwischen liegenden Schichtübergang. Vorzugsweise sollte die Hysteresis der innersten Schicht, die sich zumindest von 1,6 mm bis 2,0 mm oberhalb des Profilrillengrundes erstrecken sollte, um mindestens 10 % größer sein als an der Peripherie. Entsprechendes gilt vorzugsweise für die Weichheit.

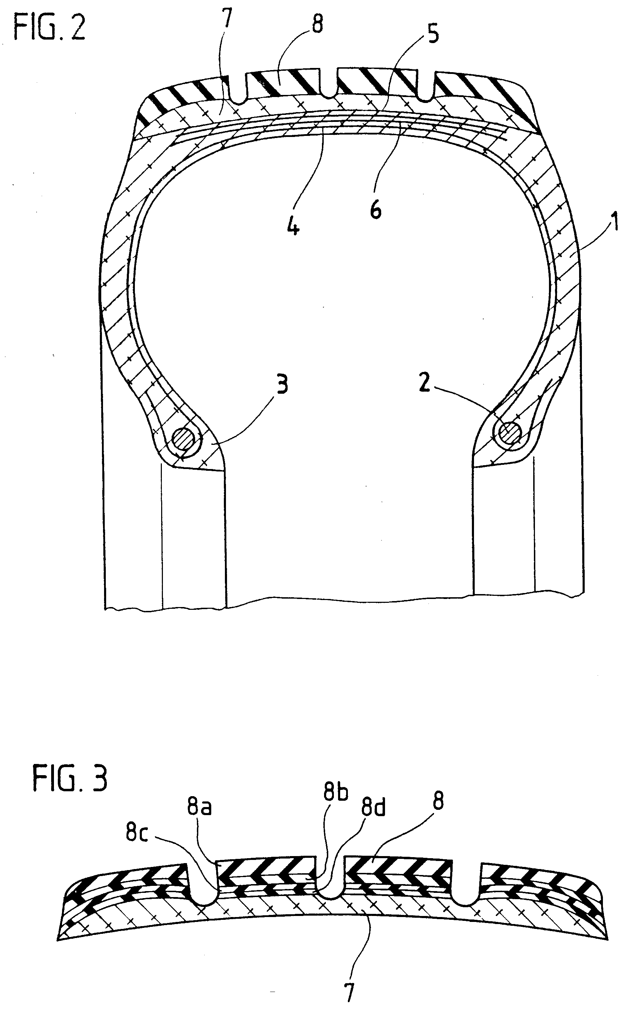

Die Erfindung wird nachfolgend anhand der Figuren 2 bis 4 näher erläutert.

Figur 2 zeigt einen Fahrzeugluftreifen 1 im Querschnitt. In an sich bekannter Weise ist um die beiden in Wülsten 3 angeordneten Wulstkerne 2 eine - hier einlagig gezeigte - Karkasse 4 herumgeschlungen, oberhalb der sich zwei Gürtellagen 5 und 6 befinden. Darauf befindet sich eine sogenannte "base" 7, das ist eine Kautschukschicht, die bekanntermaßen eine sehr geringe Hysteresis aufweist, um den Rollwiderstand klein zu halten. Neben einer gewissen Schutzfunktion gegenüber den darunter befindlichen Gürtellagen hat diese Schicht eine Isolationsfunktion gegenüber hochfrequenten Schwingungsanteilen, die nicht in zu großem Maße auf die potentiell als Resonanzkörper wirkenden Gürtellagen 5, 6 und Karkasse 4 einwirken soll. Radial außerhalb der base befindet sich eine sogenannte "cap" 8. In dieser cap 8 sind die erfindungsgemäßen Merkmale verwirklicht, wie in Figur 3 en détail gezeigt. Cap 8 und base 7 werden gemäß üblicher Fachsprache zusammenfassend als Laufstreifen bezeichnet.

Figur 3 zeigt die cap 8 als Einzelheit. In diesem größeren Abbildungsmaßstab - diese Figur ist in der Radialen maßstabsgerecht - ist die erfindungsgemäße Unterteilung der cap 8 in verschiedene, hier vier, Schichten 8a, 8b, 8c und 8d zu erkennen. Diese Schichten 8a bis 8d sind in ihrer Hysterese und ihrer Weichheit so gestaffelt, daß der Reibungsbeiwert µ gegenüber üblichem Straßenbelag bei Nässe von radial außen nach radial innen hin zunimmt. Im Gegensatz zur Hysterese-Zunahme innerhalb der cap 8 beim Gang von außen nach innen steht das beibehaltene Merkmal, der geringen Hysterese in der base 7. Während die Hysterese-Differenzen von Schicht zu Schicht in der cap 8 nur klein sein sollen, vorzugsweise etwa 8 %, soll bei Übergang von der innersten cap-Schicht 8d zur base 7 ein schroffer Hysterese-Abfall vorliegen, aber allenfalls ein geringer Steifigkeitsunterschied zur Vermeidung zu großer Spannungskonzentrationen.

Figur 4 zeigt zunächst eine Wiederholung in gestrichelter Linie 9 des Bremswegverlaufes nach dem Stand der Technik wie in Figur 1 gezeigt und in Volllinie 10 den Bremswegverlauf eines erfindungsgemäßen Reifens 1. In der radial äußersten Schicht (8a in Figur 3), die von einer Neu-Profiltiefe t von 8,5 mm bis 5,1 mm reicht, ist zur Vermeidung zu großer Reifenaufheizung die Hysteresis, also die auf den Verformungsweg bezogene Walkarbeit, kleiner gehalten als nach dem Stand der Technik üblich. Entsprechend wird im Bereich a ein geringer Abfall des Reibungsbeiwertes und demzufolge ein Anstieg des Bremsweges s auf Nässe gegenüber dem Referenzreifen hingenommen; der Bremsweg des Neureifens auf Nässe ist von 105 m auf 115 m angestiegen.

In der nächstinneren Schicht (8b in Figur 3), zu der der Bereich b des Diagramms gehört, ist die gleiche Kautschukmischung verwendet wie beim Referenzreifen. Dementsprechend decken sich in diesem Bereich die Bremswegverläufe 9 und 10.

In dem daran anschließenden nächstinneren Bereich c des Bremswegverlaufes 10, der von der Profiltiefe 3,3 mm bis 2,1 mm - der von der Anmelderin für sinnvoll gehaltenen Profilmindesttiefe - reicht, ist eine dämpfungsreichere Kautschukmischung verwendet. Unter Inkaufnahme einer in diesem Bereich vermehrt anfallenden Wärmeleistung wird dadurch ein großerer Reibungsbeiwert µ und damit ein kürzerer Bremsweg s auf Nässe als mit dem Referenzreifen erreicht.

Die nächstinnerste Schicht 8d, die innerste Schicht der cap 8, der der Bereich d in diesem Diagramm entspricht, besteht aus einer besonders hysteresereichen und weichen Gummimischung, wie sie für Anwendungen in einem Laufstreifen, weder der cap 8 noch der base 7, nach Recherche der Anmelderin bislang nicht vorgeschlagen wurde. Eine solche Gummimischung kann durch Vulkanisation folgender Kautschukmischung erzeugt werden:

| | |
|---|---|
| SBR ölverstreckt (37,5 % Ölanteil) | 137,5 % |
| aromatisches Öl | 2,5 % |
| HS-HAF Ruß (BET 90 m²/g) | 80 % |
| Schwefel | 2,0 % |
| Zinkoxyd | 3,0 % |
| Stearinsäure | 2,0 % |
| Wachs | 1,0 % |
| Antioxidant (Paraphenylendiamin) | 1,5 % |
| CBS (N-Cyclohexyl-2-benzothiazolsulfenamid) | 1,5 % |
| DPG (N,N'-Diphenylguanidin) | 0,2 % |

In dieser Rezeptur bedeuten alle Angaben den Gewichtsanteil der jeweiligen Komponente bezogen auf das Gesamtgewicht aller Polymere, hier also nur das Styrol-Butadien-Copolymer (SBR). Wegen diesem in der kautschukverarbeitenden Industrie üblichen Bezugspunkt liegt die Gesamtsumme der Gewichtsprozente über 100. Das in das Polymer vorgemischte Öl ist aromatisch und hat bei 100°C eine Mooney-Viskosität ML4 von 55.

Entsprechend der großen Hysterese und kleinen Steifigkeit dieser Gummimischung wird ein außergewöhnlich großer Reibungsbeiwert auf Nässe erreicht, der eine besonders große Bremsverzögerung zuläßt. Dementsprechend wird der im Diagramm gezeigte Bremsweg s aus 120 km/h verkürzt. Bei 1,6 mm Profiltiefe, der derzeitig vom Gesetzgeber festgeschriebenen Mindestprofiltiefe, beträgt der Bremsweg s nur noch 200 m gegenüber 225 m beim Referenzreifen. Zusammen mit der geringen Bremswegverlängerung im Neuzustand ist die Bremswegdifferenz zwischen Neuzustand und weitesterlaubtem abgefahrenen Zustand von 120 m auf 85 m geschrumpft. Häufigkeit und Schwere von Auffahrunfällen werden dadurch deutlich gesenkt.

Da Reifen nicht immer ganz gleichmäßig abreiben und vor allem weil leider immer wieder einige Autofahrer selbst die gesetzliche Mindestprofiltiefe von 1,6 mm nicht einhalten und damit andere Verkehrsteilnehmer gefährden, reicht die Laufstreifenschicht 8d bis auf eine Profiltiefe von 1,2 mm herunter.

Die cap 8 des Laufstreifens ist so dünn bemessen - um Aufwärmung und Rollwiderstandserhöhung in Grenzen zu halten -, daß die Stege der Vulkanisationsform, die die Nuten in den noch unprofilierten Rohling einprägen, die cap 8 gewissermaßen durchstechen, sodaß von der Peripherie her gesehen die base mit ihrer an sich bekannten sehr geringen Hysterese nicht erst wie bekannt unterhalb des Profilrillengrundes beginnt sondern bereits bei 1,2 mm Profiltiefe.

Die Erfindung bringt eine Erhöhung der Fahrzeugsicherheit in den heutzutage überwiegend vorliegenden Verkehrssituationen, wo Unfälle nicht durch das Verhalten eines individuellen Fahrzeuges sondern durch nicht zueinander passendes Verhalten eines Kollektives von Fahrzeugen verursacht werden.

## Patentansprüche

1. Fahrzeugreifen (1) mit einem auf seiner radial äußeren Seite angeordneten Laufstreifen (7, 8), der in mindestens zwei Schichten (8a, 8b, 8c, 8d, 7) unterteilt ist, wobei sich diese Schichten hinsichtlich ihrer für den Bremsweg auf Nässe relevanten physikalischen Eigenschaften unterscheiden,
**dadurch gekennzeichnet,**
daß die für den Bremsweg auf Nässe relevanten physikalischen Eigenschaften der radial innersten, gegen Ende der Nutzungsdauer des Fahrzeugreifens (1) in Fahrbahnkontakt tretenden Schicht (8d) des Laufstreifens (7, 8) größer sind als die für den Bremsweg auf Nässe relevanten physikalischen Eigenschaften der radial äußersten, zu Beginn der Nutzungsdauer des Fahrzeugreifens (1) in Fahrbahnkontakt tretenden Schicht (8a) des Laufstreifens (7, 8).

2. Fahrzeugreifen (1) nach Anspruch 1 dadurch gekennzeichnet, daß die über der radialen Schichtung des in Fahrbahnkontakt tretenden Laufstreifenteiles (8) variierten, für den Bremsweg auf Nässe relevanten physikalischen Eigenschaften die Hysterese ist, daß also die Hysteresis der radial innersten, gegen Ende der Nutzungsdauer in Fahrbahnkontakt tretenden Schicht (8d) des Laufstreifenteiles (8) größer ist als die Hysteresis der radial äußersten, zu Beginn der Nutzungsdauer in Fahrbahnkontakt tretenden Schicht (8a) des Laufstreifenteiles (8).

3. Fahrzeugreifen (1) nach Anspruch 1, wobei der Laufstreifen (7, 8) in eine cap (8) und eine base (7) in an sich bekannter Weise unterteilt ist, wobei die base (7) in an sich bekannter Weise hysteresearm ist,
dadurch gekennzeichnet, daß die cap (8) in mindestens zwei Schichten (8a, 8d) unterteilt ist, wobei entsprechend dem Kennzeichen des Anspruches 1 die Hysteresis der radial innersten, zuletzt in Fahrbahnkontakt tretenden Schicht (8d) der cap (8) größer ist als die Hysteresis der radial äußersten Schicht (8a) der cap (8).

4. Fahrzeugreifen (1) nach einem der vorangehenden Ansprüche dadurch gekennzeichnet, daß die Zunahme der Hysteresis von radial außen nach radial innen in der Folge der über der Nutzungsdauer in Fahrbahnkontakt tretenden Schichten (8a, 8b, 8c, 8d) in mehreren, vorzugsweise vier Stufen erfolgt.

5. Fahrzeugreifen (1) nach einem der vorangehenden Ansprüche dadurch gekennzeichnet, daß in der Laufstreifenschicht (8d), die sich zumindest von 1,6 mm bis 2,0 mm oberhalb des Profilrillengrundes befindet, die Hysterese um mindestens 10 % größer ist als an der Peripherie des Reifens.

6. Fahrzeugreifen (1) nach Anspruch 3 dadurch gekennzeichnet, daß sich die base zumindest in dem Bereich mittig zwischen umgebenden Profilrillen bis zu mindestens 1 mm, vorzugsweise 1,2 mm oberhalb des Profilrillengrundes erstreckt.

7. Fahrzeugreifen (1) nach einem der vorangehenden Ansprüche dadurch gekennzeichnet, daß in der Folge der in Fahrbahnkontakt tretenden Laufstreifenschichten (8a, 8b, 8c, 8d) die innerste (8d) um mindestens 5 Shore-Härtegrade weicher ist als die äußerste (8a).
